# EUROPEAN PATENT APPLICATION

(11) **EP 4 252 950 A1**
(43) Date of publication of application: **04.10.2023**
(21) Application number: 21897951.6
(22) Date of filing: 24.11.2021
(51) Int. Cl.: B23H 9/10, B23H 3/10

(54) **ELECTROCHEMICAL MACHINING DEVICE**

(30) Priority: 25.11.2020 JP 2020195145
(71) Applicant: KABUSHIKI KAISHA TOYOTA JIDOSHOKKI, Kariya-shi, Aichi 448-8671 (JP)
(72) Inventor: SHIMIZU, Tatsuya, Kariya-shi, Aichi 448-8671 (JP); AONO, Masahiro, Kariya-shi, Aichi 448-8671 (JP); ENDO, Satoshi, Kariya-shi, Aichi 448-8671 (JP)
(74) Representative: TBK
(86) International application number: PCT/JP2021/042925
(87) International publication number: WO 2022/113979

(57) **Abstract**

A plurality of electric discharge electrodes (130) are disposed at equal intervals along a circumference about a rotary shaft, and provided so as to be capable of being brought into and out of contact with a plurality of vanes such that one electric discharge electrode corresponds to one vane. The plurality of electric discharge electrodes (130) each have an electrode surface (131) along a surface to be machined of a corresponding one of the plurality of vanes. After the plurality of electric discharge electrodes (130) each move radially inward toward the rotary shaft, the rotary shaft rotates and electrochemical machining is thus performed while the electrode surface (131) and the surface to be machined are close to and thus face each other.

## Description

### TECHNICAL FIELD

The present invention relates to an electrochemical machining apparatus.

### BACKGROUND ART

Japanese Patent Application Laying-Open No. 01-222820 (PTL 1) is a prior art document disclosing a configuration of an apparatus to electrochemically machine an impeller. The electrochemical machining apparatus described in PTL 1 comprises a pair of generally vaned machining electrodes having a vane machining surface. When a workpiece is electrochemically machined, the workpiece is pivoted about the X axis. When machining one vane is completed, the workpiece is rotated about the Z axis by one pitch and thus positioned.

### CITATION LIST

### PATENT LITERATURE

PTL 1: Japanese Patent Laying-Open No. 1-222820

### SUMMARY OF INVENTION

### TECHNICAL PROBLEM

The electrochemical machining apparatus described in PTL 1 forms a plurality of vanes by electrochemical machining, one by one, by the pair of machining electrodes, and hence consumes a long period of time to do so. Further, as the apparatus machines the vanes one by one, the plurality of vanes may be machined with variation in precision.

The present invention has been made in view of the above issue, and an object of the present invention is to provide an electrochemical machining apparatus capable of machining an impeller with high precision in a reduced period of time.

### SOLUTION TO PROBLEM

An electrochemical machining apparatus according to the present invention is an electrochemical machining apparatus that electrochemically machines an impeller circumferentially having a plurality of roughly molded vanes. The electrochemical machining apparatus comprises a support, a rotary shaft, and a plurality of electric discharge electrodes. The support supports the impeller. The rotary shaft holds the support rotatably. The plurality of electric discharge electrodes are disposed at equal intervals along a circumference about the rotary shaft, and provided so as to be capable of being brought into and out of contact with the plurality of vanes such that one electric discharge electrode corresponds to one vane. The plurality of electric discharge electrodes each have an electrode surface along a surface to be machined of a corresponding one of the plurality of vanes. After the plurality of electric discharge electrodes each move radially inward toward the rotary shaft, the rotary shaft rotates and electrochemical machining is thus performed while the electrode surface and the surface to be machined are close to and thus face each other.

In one embodiment of the present invention, the electrochemical machining apparatus further comprises a plurality of nozzles. The plurality of nozzles are each disposed adjacent to a corresponding one of the plurality of electric discharge electrodes. The plurality of nozzles each have a discharge port to discharge an electrolytic solution between the electrode surface and the surface to be machined. The plurality of nozzles each have a concave portion on a side surface thereof that is located at an end portion thereof closer to the discharge port and faces away from the electrode surface.

In one aspect of the present invention, the support is detachably connected to the rotary shaft. In one embodiment of the present invention, the electrochemical machining apparatus further comprises a plurality of electrode holders and a plurality of positioning plates. The plurality of electrode holders hold the plurality of electric discharge electrodes such that one electrode holder corresponds to one electric discharge electrode. The plurality of positioning plates position the plurality of electric discharge electrodes on the plurality of electrode holders such that one positioning plate corresponds to one electric discharge electrode on one electrode holder.

In one aspect of the present invention, the plurality of electric discharge electrodes are each detachably connected to a corresponding one of the plurality of electrode holders.

### ADVANTAGEOUS EFFECTS OF INVENTION

The present invention allows an impeller to be machined with high precision in a reduced period of time.

### BRIEF DESCRIPTION OF DRAWINGS

Fig. 1 is a plan view of a state before an electrochemical machining apparatus according to an embodiment of the present invention starts machining.
Fig. 2 is a perspective view of a configuration of the electrochemical machining apparatus of Fig. 1.
Fig. 3 is a longitudinal cross section showing a configuration of the electrochemical machining apparatus of Fig. 2.
Fig. 4 is a plan view of a state in which the electrochemical machining apparatus according to an embodiment of the present invention has a plurality of electric discharge electrodes each moved radially inward toward a rotary shaft.
Fig. 5 is a perspective view of a configuration of an electric discharge electrode, and a first nozzle and a second nozzle comprised in the electrochemical machining apparatus according to an embodiment of the present invention.
Fig. 6 is a front view of the Fig. 5 electric discharge electrode and first and second nozzles, as seen in a direction of an arrow VI.
Fig. 7 is a perspective view of a configuration of an electric discharge electrode comprised in the electrochemical machining apparatus according to an embodiment of the present invention.
Fig. 8 is a perspective view of a configuration of the first nozzle comprised in the electrochemical machining apparatus according to an embodiment of the present invention.
Fig. 9 is a perspective view of a configuration of the second nozzle comprised in the electrochemical machining apparatus according to an embodiment of the present invention.
Fig. 10 is a plan view of a configuration of the first nozzle according to a first variation.
Fig. 11 is a partial perspective view of a first discharge port of the first nozzle and a vicinity thereof of the electrochemical machining apparatus according to a second variation, as seen at a front side.
Fig. 12 is a partial perspective view of a second discharge port of the second nozzle and a vicinity thereof of the electrochemical machining apparatus according to a third variation, as seen from below.

### DESCRIPTION OF EMBODIMENTS

Hereinafter, an electrochemical machining apparatus according to an embodiment of the present invention will be described with reference to the accompanying drawings. In the following description, identical or corresponding components in the figures are identically denoted and will not be described repeatedly in detail.

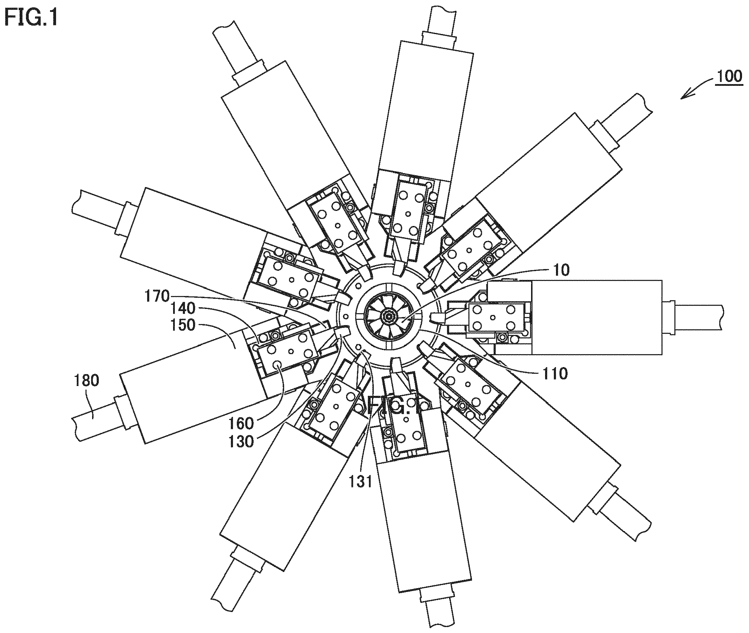

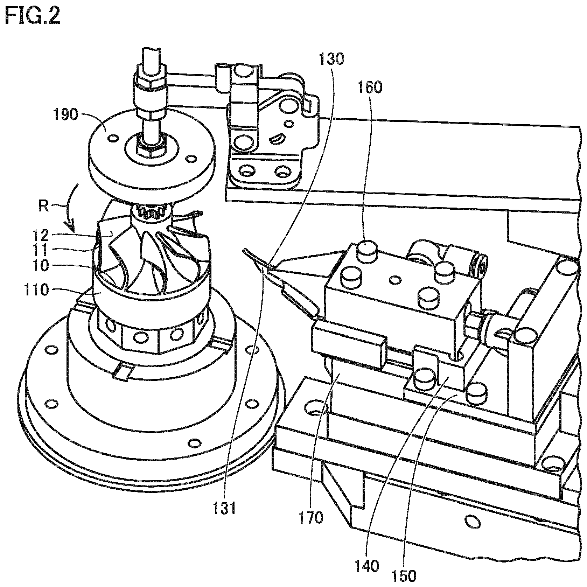

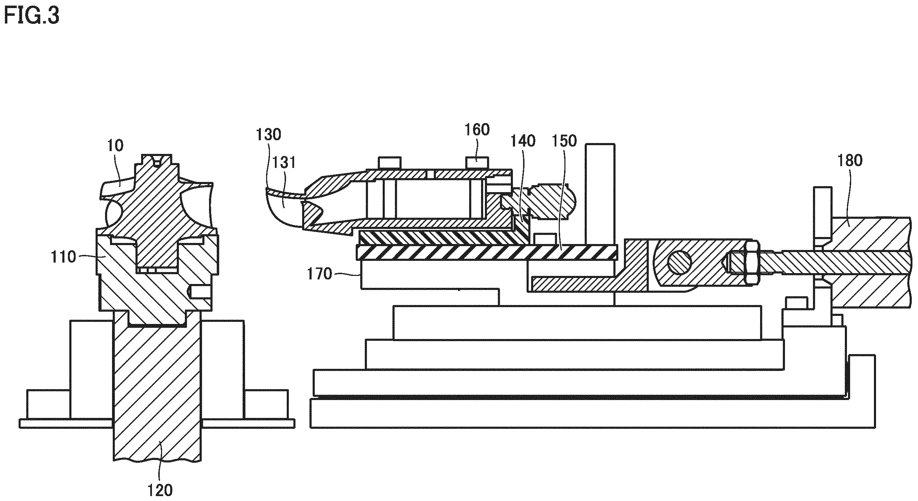

Fig. 1 is a plan view of a state before the electrochemical machining apparatus according to the embodiment of the present invention starts machining. Fig. 2 is a perspective view of a configuration of the electrochemical machining apparatus of Fig. 1. Fig. 3 is a longitudinal cross section showing the configuration of the electrochemical machining apparatus of Fig. 2. Figs. 1 and 3 do not show a clamp mechanism, which will be described later. Figs. 2 and 3 only show one electric discharge electrode of a plurality of electric discharge electrodes.

As shown in Figs. 1 to 3, an electrochemical machining apparatus 100 according to an embodiment of the present invention is an electrochemical machining apparatus that electrochemically machines an impeller 10 circumferentially having a plurality of roughly molded vanes 11. The impeller 10 is made for example of a titanium alloy. The impeller 10 before it is electrochemically machined is roughly molded for example by casting. The impeller 10 is used, for example, as a turbine wheel. The plurality of vanes 11 each have a twisted and also curved surface to be machined 12. In the present embodiment, the impeller 10 has nine vanes 11. However, the impeller 10 may not have nine vanes 11 and may have a plurality of vanes 11 other than nine vanes.

The electrochemical machining apparatus 100 comprises a support 110, a rotary shaft 120, and a plurality of electric discharge electrodes 130. The support 110 detachably supports the impeller 10. The rotary shaft 120 holds the support 110 rotatably. The support 110 is detachably connected to the rotary shaft 120. The rotary shaft 120 is connected to a rotation drive unit (not shown).

The plurality of electric discharge electrodes 130 are disposed at equal intervals along a circumference about the rotary shaft 120, and provided so as to be capable of being brought into and out of contact with the plurality of vanes 11 such that one electric discharge electrode corresponds to one vane. In the present embodiment, the electrochemical machining apparatus 100 comprises nine electric discharge electrodes 130. One electric discharge electrode 130 is disposed so as to be able to come into and out of contact with one vane 11.

The electric discharge electrode 130 has an electrode surface 131 along the surface to be machined 12 of the vane 11. That is, the plurality of electric discharge electrodes 130 each have the electrode surface 131 along the surface to be machined 12 of a corresponding one of the plurality of vanes 11. The electrode surface 131 is twisted and also curved.

The electrochemical machining apparatus 100 further comprises a plurality of electrode holders 170 and a plurality of positioning plates 140. The electric discharge electrode 130 is held by the electrode holder 170 so as to be movable radially about the rotary shaft 120. The plurality of electrode holders 170 hold the plurality of electric discharge electrodes 130 such that one electrode holder corresponds to one electric discharge electrode. In the present embodiment, the electrochemical machining apparatus 100 comprises nine electrode holders 170. The nine electrode holders 170 are each provided so as to be capable of sliding linearly.

The plurality of electric discharge electrodes 130 are each detachably connected to a corresponding one of the plurality of electrode holders 170. In the present embodiment, the electric discharge electrode 130 is provided with a through hole. The electric discharge electrode 130 is fastened to the electrode holder 170 with a bolt 160 inserted through the through hole.

An insulating plate 150 is disposed on an upper surface of each of the plurality of electrode holders 170. The electric discharge electrode 130 and the electrode holder 170 are electrically insulated from each other by the insulating plate 150. The insulating plate 150 is made for example of an insulating resin such as epoxy resin.

The positioning plate 140 is fixed on the insulating plate 150. The positioning plate 140 has a flat upper surface on which the electric discharge electrode 130 is mounted, a side wall in contact with a side surface of the electric discharge electrode 130, and a rear wall in contact with an end surface of a base side of the electric discharge electrode 130.

The electric discharge electrode 130 placed on the upper surface of the positioning plate 140 is positioned on the electrode holder 170 by being disposed such that the side wall of the positioning plate 140 and the side surface of the electric discharge electrode 130 are in contact with each other and the rear wall of the positioning plate 140 and the end surface of the base side of the electric discharge electrode 130 are in contact with each other. In other words, the plurality of positioning plates 140 position the plurality of electric discharge electrodes 130 on the plurality of electrode holders 170 such that one positioning plate corresponds to one electric discharge electrode on one electrode holder. The electric discharge electrode 130 can be positionally, finely adjusted by a shim inserted into a gap between the electric discharge electrode 130 and the positioning plate 140.

The electrode surface 131 of the electric discharge electrode 130 positioned on the electrode holder 170 is located at a position spaced from and facing the surface to be machined 12 of the impeller 10 to be machined when the electric discharge electrode 130 moves radially inward toward the rotary shaft 120, as will be described later.

The electrochemical machining apparatus 100 further comprises a linear drive unit 180 that drives the electrode holder 170 radially about the rotary shaft 120. In the present embodiment, nine linear drive units 180 are provided, and each linear drive unit 180 is connected to one electrode holder 170.

As shown in Fig. 2, the electrochemical machining apparatus 100 further comprises a clamp mechanism 190. The clamp mechanism 190 is provided so as to be movable in a vertical direction, and can press and clamp from above the impeller 10 supported by the support 110.

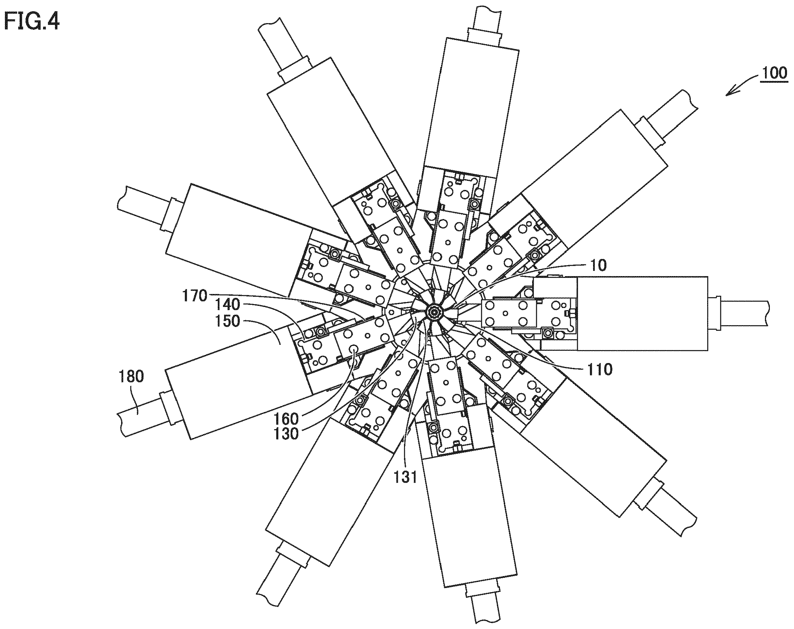

Fig. 4 is a plan view of a state in which the electrochemical machining apparatus according to an embodiment of the present invention has the plurality of electric discharge electrodes each moved radially inward toward the rotary shaft. Fig. 4 shows the electric discharge electrodes 130 alone moved radially inward toward the rotary shaft.

When the linear drive unit 180 drives to cause the electrode holder 170 to approach the impeller 10, the electric discharge electrode 130 moves radially inward toward the rotary shaft 120, as shown in Fig. 4. As a result, the electrode surface 131 of the electric discharge electrode 130 faces the surface to be machined 12 of the vane 11 to be machined, with a gap therebetween.

Subsequently, the rotary shaft 120 is rotated by the rotation drive unit in a direction indicated by an arrow R shown in Fig. 2, and the electrode surface 131 and the surface to be machined 12 thus approach and face each other. In the present embodiment, the electrode surfaces 131 of the nine electric discharge electrodes 130 approach and thus face the surfaces to be machined 12 of the nine vanes 11 concurrently such that one electrode surface corresponds to one surface to be machined. In this state, a voltage is applied to the electric discharge electrode 130 to perform electrical discharge machining. The vane 11 having undergone electrical discharge machining is smaller in thickness than the roughly molded vane and has the surface 12 machined and smoothened in surface roughness.

Hereinafter, a configuration of the electric discharge electrode 130 in the electrochemical machining apparatus 100 according to the present embodiment will be described in detail.

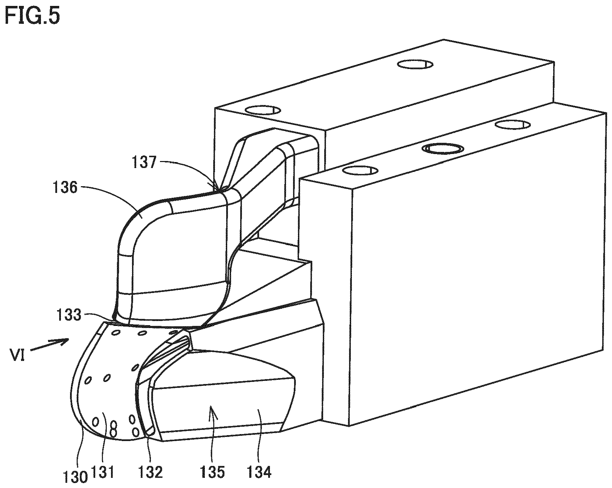

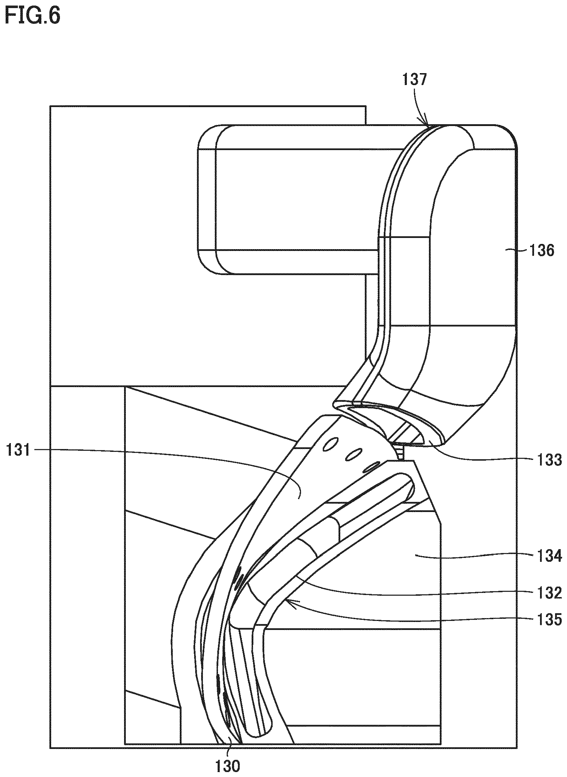

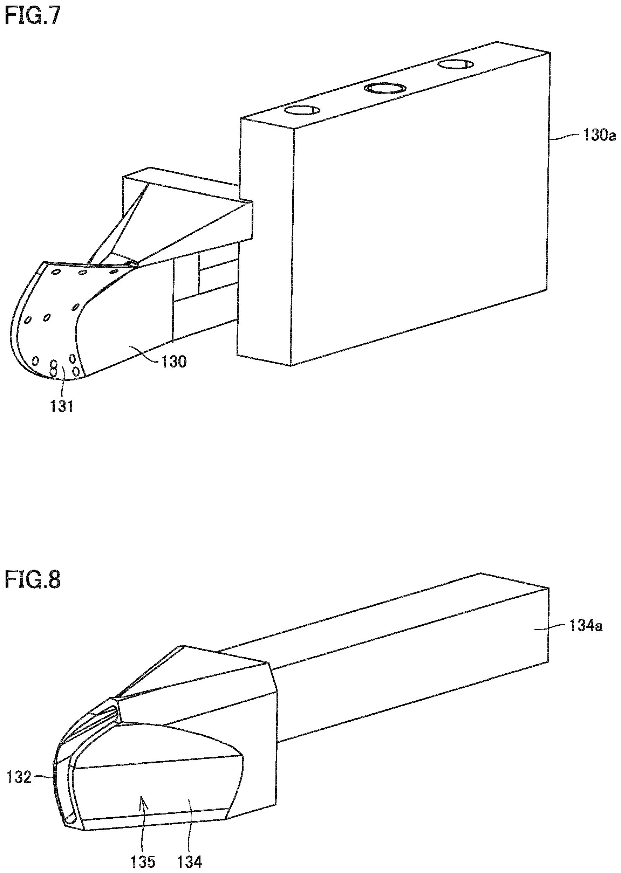

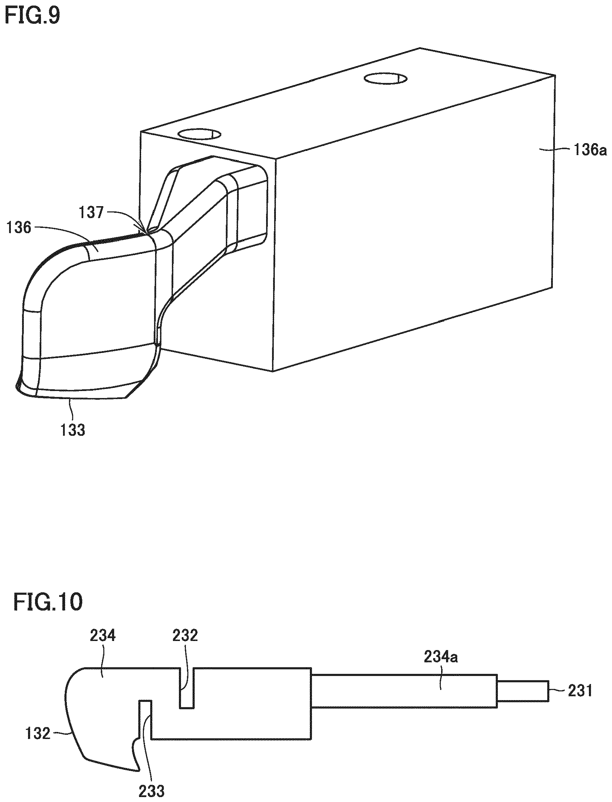

Fig. 5 is a perspective view of a configuration of an electric discharge electrode, and a first nozzle and a second nozzle comprised in the electrochemical machining apparatus according to an embodiment of the present invention. Fig. 6 is a front view of the Fig. 5 electric discharge electrode and first and second nozzles, as seen in a direction of an arrow VI. Fig. 7 is a perspective view of a configuration of an electric discharge electrode comprised in the electrochemical machining apparatus according to an embodiment of the present invention. Fig. 8 is a perspective view of a configuration of the first nozzle comprised in the electrochemical machining apparatus according to an embodiment of the present invention. Fig. 9 is a perspective view of a configuration of the second nozzle comprised in the electrochemical machining apparatus according to an embodiment of the present invention.

As shown in Figs. 5 to 9, the electrochemical machining apparatus 100 further comprises a first nozzle 134 and a second nozzle 136 which are configured to be attachable to the electric discharge electrode 130 and integrated therewith, and detachable from the electric discharge electrode 130. The electric discharge electrode 130 is composed of a conductive member. The first and second nozzles 134 and 136 are each made of an insulating resin such as epoxy resin.

Note, however, that the electric discharge electrode 130 and the first and second nozzles 134 and 136 may be composed of a single conductive member. For example, the electric discharge electrode 130 and the first and second nozzles 134 and 136 may be integrally and inseparably formed by a 3D printer or the like using a conductive material.

As shown in Figs. 5 and 6, the first nozzle 134 is disposed adjacent to the electric discharge electrode 130. In the present embodiment, nine first nozzles 134 are each disposed adjacent to a corresponding one of the nine electric discharge electrodes 130.

The first nozzle 134 has a first discharge port 132 that discharges an electrolytic solution between the electrode surface 131 and the surface to be machined 12 along the electrode surface 131 while the electrode surface 131 and the surface to be machined 12 are close to and face each other, as shown in Fig. 4. The first discharge port 132 has a shape along the electrode surface 131, as seen at a front side. The first nozzle 134 has a concave portion 135 on a side surface thereof that is located at an end portion thereof closer to the first discharge port 132 and faces away from the electrode surface 131.

The second nozzle 136 is disposed above the electric discharge electrode 130. The second nozzle 136 has a second discharge port 133 that discharges an electrolytic solution between the electrode surface 131 and the surface to be machined 12 from above while the electrode surface 131 and the surface to be machined 12 are close to and face each other, as shown in Fig. 4. The second nozzle 136 is curved at a curved portion 137, as seen from above, and the second discharge port 133 is located above the electrode surface 131. The second discharge port 133 has a shape along the electrode surface 131 when seen from below.

As shown in Fig. 7, the electric discharge electrode 130 has a body 130a engaged with each of the first and second nozzles 134 and 136. As shown in Fig. 8, the first nozzle 134 has a first engagement portion 134a which has a channel formed therein to pass an electrolytic solution toward the first discharge port 132 and engages with the body 130a. The electric discharge electrode 130 and the first nozzle 134 are configured integrally such that they are attachable to and detachable from each other.

As shown in Fig. 9, the second nozzle 136 has a second engagement portion 136a which has a channel formed therein to pass an electrolytic solution toward the second discharge port 133 and engages with the body 130a. The electric discharge electrode 130 and the second nozzle 136 are configured integrally such that they are attachable to and detachable from each other.

Fig. 10 is a plan view of a configuration of the first nozzle according to a first variation. As shown in Fig. 10, a first nozzle 234 according to the first variation includes an inlet 231 which receives an electrolytic solution, and a first engagement portion 234a which has a channel formed therein to pass the electrolytic solution toward the first discharge port 132 and engages with the body 130a.

The channel of the first nozzle 234 that passes the electrolytic solution is provided with a rectifying mechanism. In the first variation, the first nozzle 234 is provided with a first narrowed portion 232 and a second narrowed portion 233. Thus, the channel in the first nozzle 234 to pass the electrolytic solution meanders between the inlet 231 and the first discharge port 132, and the inlet 231 and the first discharge port 132 do not communicate linearly. The rectifying mechanism is not limited in configuration to a narrowed portion, and a configuration allowing the first discharge port 132 to discharge the electrolytic solution in a uniform distribution suffices. The rectifying mechanism may be provided to the second nozzle 136. When the rectifying mechanism is provided to the second nozzle 136, the second discharge port 133 can discharge an electrolytic solution in a uniform distribution.

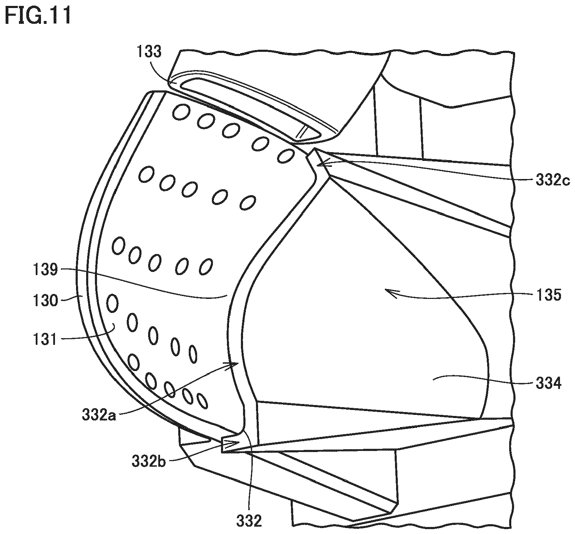

Fig. 11 is a partial perspective view of the first discharge port of the first nozzle and a vicinity thereof of the electrochemical machining apparatus according to a second variation, as seen at a front side. As shown in Fig. 11, the electrochemical machining apparatus according to the second variation has a first nozzle 334 with a first discharge port 332 composed of a wall surface 139 of the electric discharge electrode 130 contiguous to the electrode surface 131, a surface 332a of the first nozzle 334 spaced from and facing the wall surface 139, and a first connection surface 332b and a second connection surface 332c interconnecting the wall surface 139 and the surface 332a.

In the second variation, an electrolytic solution discharged through the first discharge port 332 of the first nozzle 334 can be supplied between the electrode surface 131 and the surface to be machined 12 from the wall surface 139 continuously along the electrode surface 131. This allows the electrolytic solution to be supplied between the electrode surface 131 and the surface to be machined 12 in a more uniform distribution and allows the impeller 10 to be machined with high precision.

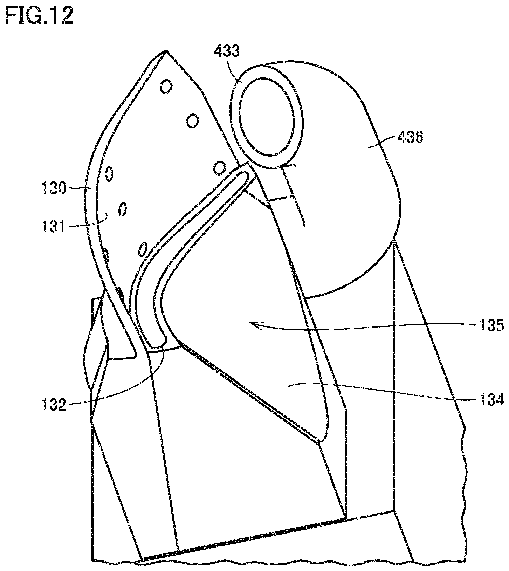

Fig. 12 is a partial perspective view of the second discharge port of the second nozzle and a vicinity thereof of the electrochemical machining apparatus according to a third variation, as seen from below. As shown in Fig. 12, according to the third variation, the electrochemical machining apparatus comprises a second nozzle 436 having a second discharge port 433 that is generally in the form of a circle when seen from below. The second discharge port 433 has an opening larger in area than that of the second discharge port 133 according to one embodiment. This allows the second discharge port 433 to discharge an electrolytic solution at a reduced flow velocity to supply the electrolytic solution between the electrode surface 131 and the surface to be machined 12 mainly where the electrolytic solution discharged through the first discharge port 132 does not easily reach.

The electrochemical machining apparatus 100 according to one embodiment of the present invention is an electrochemical machining apparatus that electrochemically machines the impeller 10 circumferentially having a plurality of roughly molded vanes 11, and after the plurality of electric discharge electrodes 130 each move radially inward toward the rotary shaft 120, the rotary shaft 120 rotates and electrochemical machining is thus performed while the electrode surface 131 and the surface to be machined 12 are close to and thus face each other. This allows the impeller 10 to have the plurality of roughly molded vanes 11 electrochemically machined simultaneously and hence in a reduced period of time, and also suppresses variation caused in precision in machining the plurality of vanes 11 and thus allows the impeller 10 to be machined with high precision.

In the electrochemical machining apparatus 100 according to an embodiment of the present invention, the first nozzle 134 disposed adjacent to the electric discharge electrode 130 has the first discharge port 132 that discharges an electrolytic solution between the electrode surface 131 and the surface to be machined 12 along the electrode surface 131. This allows the electrolytic solution to be supplied between the electrode surface 131 and the surface to be machined 12 in a uniform distribution and allows the impeller 10 to be machined with high precision.

In the electrochemical machining apparatus 100 according to an embodiment of the present invention, the first nozzle 134 has a concave portion 135 on a side surface thereof that is located at an end portion thereof closer to the first discharge port 132 and faces away from the electrode surface 131. As shown in Fig. 4, in a state with the electrode surface 131 and the surface to be machined 12 close to and facing each other, the concave portion 135 can suppress interference between an adjacent electric discharge electrode 130 and the first nozzle 134.

In the electrochemical machining apparatus 100 according to an embodiment of the present invention, the support 110 is detachably connected to the rotary shaft 120. This allows only a support 110 damaged by electrochemical machining to be removed from the rotary shaft 120 and replaced with another support.

In the electrochemical machining apparatus 100 according to an embodiment of the present invention, the positioning plate 140 positions the electric discharge electrode 130 on the electrode holder 170. This can reduce variation in a positional relationship between the electrode surface 131 and the surface to be machined 12, and thus allows the impeller 10 to be machined with high precision. Further, the electric discharge electrode 130 can be positionally, finely adjusted by a shim inserted into a gap between the electric discharge electrode 130 and the positioning plate 140.

In the electrochemical machining apparatus 100 according to an embodiment of the present invention, the electric discharge electrode 130 is detachably connected to the electrode holder 170. This allows only an electric discharge electrode 130 damaged by electrochemical machining to be removed from the electrode holder 170 and replaced with another electric discharge electrode.

In the electrochemical machining apparatus 100 according to an embodiment of the present invention, the second nozzle 136 disposed above the electric discharge electrode 130 has the second discharge port 133 that discharges an electrolytic solution between the electrode surface 131 and the surface to be machined 12 from above. This allows the electrolytic solution to be supplied between the electrode surface 131 and the surface to be machined 12 in a more uniform distribution and allows the impeller 10 to be machined with high precision.

In the electrochemical machining apparatus 100 according to an embodiment of the present invention, the electric discharge electrode 130 and the first nozzle 134 are configured integrally such that they are attachable to and detachable from each other. When this is compared with the electric discharge electrode 130 and the first nozzle 134 integrally formed inseparably, the former facilitates manufacturing the electric discharge electrode 130 and the first nozzle 134 and allows only an electric discharge electrode 130 damaged by electrochemical machining to be replaced with another.

In the electrochemical machining apparatus 100 according to an embodiment of the present invention, the electric discharge electrode 130 and the second nozzle 136 are configured integrally such that they are attachable to and detachable from each other. When this is compared with the electric discharge electrode 130 and the second nozzle 136 integrally formed inseparably, the former facilitates manufacturing the electric discharge electrode 130 and the second nozzle 136 and allows only an electric discharge electrode 130 damaged by electrochemical machining to be replaced with another.

In the electrochemical machining apparatus 100 according to an embodiment of the present invention, the second nozzle 136 is curved at the curved portion 137 when seen from above, and the second discharge port 133 is located above the electrode surface 131. This can suppress interference between adjacent second nozzles 136 while the electrode surface 131 and the surface to be machined 12 are close to and face each other, as shown in Fig. 4.

In the electrochemical machining apparatus according to a first variation, a rectifying mechanism is provided to at least one of a channel of the first nozzle 234 for an electrolytic solution toward the first discharge port 132 and a channel of the second nozzle 136 for an electrolytic solution toward the second discharge port 133. This allows at least one of the first discharge port 132 and the second discharge port 133 to discharge an electrolytic solution in a uniform distribution to supply the electrolytic solution between the electrode surface 131 and the surface to be machined 12 in a more uniform distribution to machine the impeller 10 with high precision.

In the electrochemical machining apparatus according to a second variation, the first nozzle 334 has the first discharge port 332 composed of the wall surface 139 of the electric discharge electrode 130 contiguous to the electrode surface 131, the surface 332a of the first nozzle 334 spaced from and facing the wall surface 139, and the first connection surface 332b and the second connection surface 332c interconnecting the wall surface 139 and the surface 332a. Thus, an electrolytic solution discharged through the first discharge port 332 of the first nozzle 334 can be supplied between the electrode surface 131 and the surface to be machined 12 continuously from the wall surface 139 along the electrode surface 131 in a more uniform distribution, and the impeller 10 can be machined with high precision.

In the electrochemical machining apparatus according to a third variation, the second nozzle 436 has the second discharge port 433 generally in the form of a circle when seen from below, and having an opening with a relatively large area. This allows the second discharge port 433 to discharge an electrolytic solution at a reduced flow velocity to supply the electrolytic solution between the electrode surface 131 and the surface to be machined 12 mainly where the electrolytic solution discharged through the first discharge port 132 does not easily reach.

It should be understood that the presently disclosed embodiments are illustrative and non-restrictive in any respect. The scope of the present invention is defined by the terms of the claims, rather than the above description, and is intended to include any modifications within the meaning and scope equivalent to the terms of the claims.

### REFERENCE SIGNS LIST

10 impeller, 11 vane, 12 surface to be machined, 100 electrochemical machining apparatus, 110 support, 120 rotary shaft, 130 electric discharge electrode, 130a body, 131 electrode surface, 132, 332, first discharge port, 133, 433, second discharge port, 134, 234, 334, first nozzle, 134a, 234a first engagement portion, 135 concave portion, 136, 436, second nozzle, 136a second engagement portion, 137 curved portion, 139 wall surface, 140 positioning plate, 150 insulating plate, 160 bolt, 170 electrode holder, 180 linear drive unit, 190 clamp mechanism, 231 inlet, 232 first narrowed portion, 233 second narrowed portion, 332a facing surface, 332b first connection surface, 332c second connection surface.

## Claims

1. An electrochemical machining apparatus that electrochemically machines an impeller circumferentially having a plurality of roughly molded vanes, comprising:
a support that supports the impeller;
a rotary shaft that holds the support rotatably; and
a plurality of electric discharge electrodes disposed at equal intervals along a circumference about the rotary shaft, and provided so as to be capable of being brought into and out of contact with the plurality of vanes such that one electric discharge electrode corresponds to one vane; wherein
the plurality of electric discharge electrodes each have an electrode surface along a surface to be machined of a corresponding one of the plurality of vanes, and
after the plurality of electric discharge electrodes each move radially inward toward the rotary shaft, the rotary shaft rotates and electrochemical machining is thus performed while the electrode surface and the surface to be machined are close to and thus face each other.

2. The electrochemical machining apparatus according to claim 1, further comprising a plurality of nozzles each disposed adjacent to a corresponding one of the plurality of electric discharge electrodes and having a discharge port to discharge an electrolytic solution between the electrode surface and the surface to be machined, wherein the plurality of nozzles each have a concave portion on a side surface thereof that is located at an end portion thereof closer to the discharge port and faces away from the electrode surface.

3. The electrochemical machining apparatus according to claim 1 or 2, wherein the support is detachably connected to the rotary shaft.

4. The electrochemical machining apparatus according to any one of claims 1 to 3, further comprising:
a plurality of electrode holders that hold the plurality of electric discharge electrodes such that one electrode holder corresponds to one electric discharge electrode; and
a plurality of positioning plates that position the plurality of electric discharge electrodes on the plurality of electrode holders such that one positioning plate corresponds to one electric discharge electrode on one electrode holder.

5. The electrochemical machining apparatus according to claim 4, wherein the plurality of electric discharge electrodes are each detachably connected to a corresponding one of the plurality of electrode holders.
